Europäisches Patentamt

European Patent Office

Office européen des brevets

(11) Veröffentlichungsnummer: **0 423 567 A2**

## (12) EUROPÄISCHE PATENTANMELDUNG

(21) Anmeldenummer: 90119162.7

(22) Anmeldetag: 05.10.90

(51) Int. Cl.5: **B09B 3/00, C04B 18/08**

(30) Priorität: 20.10.89 DE 3934948

(43) Veröffentlichungstag der Anmeldung:
24.04.91 Patentblatt 91/17

(84) Benannte Vertragsstaaten:
AT BE CH DE FR GB IT LI NL SE

(71) Anmelder: **INCA Baustofftechnik GmbH**
**Waffenschmidtstrasse 4**
**W-5000 Köln 71(DE)**

(72) Erfinder: **Roesky, Werner**
**St. Anno Höhe 27**
**W-5063 Overath(DE)**
Erfinder: **Deffner, Dieter**
**Herweg 38b**
**W-5060 Bergisch Gladbach 1(DE)**
Erfinder: **Wolter, Manfred**
**Edelrather Weg 141**
**W-5090 Leverkusen 1(DE)**

(74) Vertreter: **Freischem, Werner, Dipl.-Ing.**
**Patentanwälte Dipl.-Ing. W. Freischem**
**Dipl.-Ing. I. Freischem An Gross St. Martin 2**
**W-5000 Köln 1(DE)**

(54) Verfahren zur Entsorgung von Stäuben aus Abfallverbrennungsanlagen.

㊙ Es handelt sich um ein Verfahren zur Entsorgung von Flugstäuben aus Abfallverbrennungsanlagen, bei welchem die Stäube mit anderen Stoffen unter Zusatz von Wasser intensiv gemischt werden, und die Mischung danach unter Verdichtung zu Formlingen verarbeitet wird, die in einem Autoklaven bei einem Sattdampfdruck von mindestens 1 bar gehärtet werden.

Bei Flugstäuben mit geringem Kalkgehalt werden diese Flugstäube unter Zusatz von Wasser mit Zement oder einem Gemisch aus Zement und Kalkhydrat vermischt und bei Flugstäuben, die hydrothermal umsetzbaren Kalk enthalten, werden diese Flugstäube unter Zusatz von Wasser mit Zement oder einem Gemisch von Zement und solchen Stoffen, die beim hydrothermalen Prozeß Kalk binden, wie z.B. Quarzmehl oder Flugstäube aus mis Steinkohle befeuerten Wärmeerzeugungsanlagen, vermischt.

EP 0 423 567 A2

## VERFAHREN ZUR ENTSORGUNG VON STÄUBEN AUS ABFALLVERBRENNUNGSANLAGEN

Zur Entsorgung von salzhaltigen Stäuben aus Abfallverbrennungsanlagen ist aus der DE-OS 37 34 879 ein Verfahren bekannt, das dadurch gekennzeichnet ist, daß die salzhaltigen Stäube mit anderen Abfallstoffen, wie Aschen und Flugstäube aus mit Steinkohle oder Braunkohle befeuerten Wärmeerzeugungsanlagen, kieselsäurehaltige Sande, insbesondere Quarzsande enthaltende Abfallstoffe der Gießereien oder aus Bauschutt, Abfallstoffe der Calciumcarbidherstellung, unter Zusatz von Wasser intensiv gemischt werden, wobei die Mischung mindestens 8 % hydrothermalumsetzbares Calciumoxid bzw. äquivalente Mengen anderer hydrothermalumsetzbarer Calciumverbindungen enthält und der Wasserzusatz so bemessen ist, daß eine optimale Verdichtung möglich ist und die Mischung danach unter Verdichtung zu standfesten Formlingen verarbeitet wird und die Formlinge anschließend in einem Autoklav bei einem Sattdampfdruck von mindestens 1 bar gehärtet werden.

Dieses bekannte Verfahren zur Entsorgung von salzhaltigen Stäuben aus trocken oder quasitrocken arbeitenden Reinigungsanlagen ist für die Entsorgung von Flugstäuben aus Abfallverbrennungsanlagen nicht geeignet, wenn diese kein oder nur geringe Mengen an hydrothermal umsetzbares Calciumhydroxid enthalten.

Die Reinigung der Rauchgase aus Abfallverbrennungsanlagen erfolgt in mindestens zwei Verfahrensstufen:

in einer chemische Rauchgasreinigung, die die gasförmigen Schadstoffe umwandelt, und in einer physikalischen Rauchgasreinigung, die die Feststoffe abscheidet. Je nach Art der chemischen Rauchgasreinigung spricht man von Trockenverfahren, Quasitrockenverfahren oder Naßverfahren. Bei den beiden erstgenannten Verfahren fallen salzhaltige Stäube an, die meistens noch einen Überschuß an freiem Kalk aufweisen. Die Flugstäube aus den Reinigungsanlagen mit Naßverfahren sind salzarm und weisen keinen oder nur geringe Mengen an freiem Kalk auf.

Zur Reduzierung der Sulfat- und Chloridgehalte der Rauchgase aus Abfallverbrennungsanlagen wird in den Verbrennungsraum auch gebrannter oder ungebrannter Kalk eingeblasen, wodurch sich die Chlorid-, Fluorid- und Sulfatgehalte aber auch der freie Kalkgehalt in den Flugstäuben erhöhen. Der freie Kalkgehalt dieser Flugstäube ergibt sich dadurch, daß der eingeblasene Kalk sich mit den Chloriden, Fluoriden und den Sulfaten in den Rauchgasen nicht vollständig umsetzt.

Die Erfindung betrifft ein Verfahren zur Entsorgung von kalkarmen und kalkhaltigen Flugstäuben aus Abfallverbrennungsanlagen, die bei den unterschiedlichen Verfahren anfallen.

Zur Behandlung der Flugstäube aus Abfallverbrennungsanlagen ist es bekannt, die Stäube mit Zement und soviel Wasser zu vermischen, daß eine erdfeuchte, krümelige Masse entsteht und dieses Frischmörtelgemisch zur Deponie zu transportieren und auf der Deponie mit den üblichen Erdeinbaugeräten zu verdichten. Nach der Verdichtung härtet der Mörtel auf der Deponie aus.

Der Nachteil dieses Verfahrens ist, daß der verdichtete und erhärtende Mörtel größere Mengen an freiem Kalkhydrat aufweist, was einen hohen pH-Wert und damit eine hohe Löslichkeit für Blei bedingt, so daß sie auf einer Deponie der Klasse 4 oder 5 abgelagert werden müssen und daß die deponierten Mörtelmischungen nicht verwertet werden können z.B. nach Zerkleinerung als Sandersatzmaterial.

Der Erfindung liegt die Aufgabe zugrunde, ein Verfahren zur Entsorgung von schwermetallhaltigen Flugstäuben aus Abfallverbrennungsanlagen zu schaffen, bei dem qualitätsüberprüfbare Produkte fabrikmäßig erzeugt werden, die hinsichtlich der Auslaugung von Schwermetallen den zulässigen Werten der Deponieklasse 2 entsprechen. Damit wird die Voraussetzung geschaffen, die Verfestigungsprodukte auch einer Verwertung zuzuführen zu können.

Ausgehend von dem eingangs beschriebenen Verfahren zur Entsorgung von salzhaltigen Stäuben wird diese Aufgabe erfindungsgemäß dadurch gelöst, daß bei Flugstäuben aus Abfallverbrennungsanlagen mit geringem Kalkgehalt, diese Flugstäube unter Zusatz von Wasser mit Zement oder einem Gemisch aus Zement und Kalkhydrat, bei Flugstäuben aus Abfallverbrennungsanlagen, die hydrothermal umsetzbaren Kalk enthalten, unter Zusatz von Wasser mit Zement oder einem Gemisch von Zement und solchen Stoffen, die beim hydrothermalen Prozeß Kalk binden, wie z.B. Quarzmehl oder Flugstäube aus mit Steinkohle befeuerten Wärmeerzeugungsanlagen, vermischt werden.

Es hat sich ferner als vorteilhaft erwiesen, auch salzhaltige Stäube aus der trockenen oder quasitrockenen Rauchgasreinigung von Abfallverbrennungsanlagen unter Zusatz von Wasser mit Zement zu vermischen, weil dadurch die Festigkeit der Rohlinge verbessert wird. Mit Rohlingen bezeichnen wir die nach der Verdichtung anfallenden, aber noch nicht hydrothermal behandelten Formkörper.

Eine ausreichend hohe Rohlingsfestigkeit ist insbesondere von Bedeutung, wenn das Staub-Bindemittel-Gemisch auf Walzenpressen zu eierbrikettförmigen Produkten verdichtet wird, da diese Produkte nicht wie die auf einer Presse hergestellten quaderförmigen Rohlinge mit Hilfe einer Stapelvorrichtung auf einen Wagen abgeleg t werden, sondern einer Belastung unterliegen, die sich aus dem freien Fall nach der Verdichtung auf eine Siebmaschine oder ein Transportband ergibt.

Durch den Einsatz von Zement als Bindemittel kann ferner der Anteil an Flugstäuben aus Abfallverbrennungsanlagen in der Mischung wesentlich erhöht werden, was von wirtschaftlicher Bedeutung ist, da dadurch geringere Stoffmengen der Deponie oder der Verwertung zugeführt werden müssen.

Der Zusatz an Zement oder eines Zement-Kalk-Gemisches oder eines Gemisches aus Zement und einem kalkbindenden Stoff und die Behandlungsdauer und der Bedhandlungsdruck im Autoklaven sind so zu wählen, daß der pH-Wert des Eluats der Verfestigungsprodukte ermittelt nach DIN 38414, Teil 4, um 11 liegt.

Die Löslichkeit der Schwermetalle ist vom pH-Wert abhängig. Es wurde gefunden, daß die Löslichkeit von Cadmium im pH-Bereich von 9 bis 13 abnimmt, während die Löslichkeit von Blei bis in den pH-Bereich von 11 ebenfalls abnimmt, oberhalb von 11 jedoch wieder ansteigt. Für beide Schwermetalle liegt deshalb der optimale pH-Bereich um 11. Auch Chrom, Nickel und Zink haben in dem genannten pH-Bereich ausgeprägte Löslichkeitsminima.

Dagegen wird bei der konventionellen Vermörtelungstechnik von Flugstäuben und salzhaltigen Stäuben bei der Umsetzung von Zement mit Wasser bei Raumtemperatur nicht nur kein Kalk gebunden, sondern Kalkhydrat durch die Hydration des Zementes freigesetzt, wodurch sich der pH-Wert des Eluats dieser Mischungen auf über 12 einstellt. Wie oben erläutert, ist dieser ph-Bereich sehr ungünstig.

Es hat sich gezeigt, daß durch die hydrothermale Behandlung die überschüssige Kalkhydratmenge mit den silikatischen und aluminatischen Bestandteilen des Flugstaubes reagiert, wodurch einerseits der pH-Wert reduziert und andererseits die Festigkeit der Produkte erhöht wird.

Das erfindungsgemäße Verfahren wird an den folgenden Beispielen näher erläutert:

Beispiel 1:

In einem Mischer werden 85 Gewichtsteile eines kalkarmen Flugstaubes aus einer Abfallverbrennungsanlage mit einem freien Kalkgehalt von ca. 1 % CaO mit 15 Gewichtsteilen Zement unter Zusatz von 7 Gewichtsteilen Wasser auf 100 Gewichtsteile Feststoffe intensiv gemischt. Die Mischung wird auf einer Walzenpresse zu Eierbriketts mit einem Volumen von ca. 14 cm$^3$ verpreßt. Es wird eine spezifische Preßkraft von 10 bis 18 kN/cm angewendet.

Anschließend werden die Formlinge in einem Autoklaven 4 Stunden bei einem Sattdampfdruck von 16 bar gehärtet. Die Aufheizdauer beträgt 1 Stunde, die Abkühldauer 2 Stunden.

Die Eluatwerte des Flugstaubes und der Verfestigungsprodukte wurde in Anlehnung an DIN 38414, Teil 4, ermittelt.

In der folgenden Tafel sind eingetragen:
in Spalte I: die zulässigen Grenzwerte der Trinkwasserverordnung von 1986
in Spalte II: die zulässigen Grenzwerte der Deponieklasse 2
in Spalte III: die ermittelten Eluatwerte des verarbeiteten Flugstaubes und
in Spalte IV: die ermittelten Eluatwerte des nach dem Beispiel hergestellten Verfestigungsproduktes

# EP 0 423 567 A2

Tabelle

|  | I Trinkwasserverordnung 1986 | II Deponieklasse 2 | III Kalkarmer Flugstaub | IV Verfestigungsprodukt |
|---|---|---|---|---|
| pH |  | 5,5 - 12,0 | 11,3 | 10,1 |
| Pb mg/l | 0,04 | 0,5 | 0,19 | < 0,005 |
| Hg mg/l | 0,001 | 0,005 | 0,002 | 0,0016 |
| Cd mg/l | 0,005 | 0,05 | 0,002 | < 0,0005 |
| TL mg/l | - | 0,1 | 0,05 | < 0,005 |
| Zn mg/l | - | 5,0 | 0,38 | < 0,01 |
| Sn mg/l | - | 0,5 | < 0,005 | < 0,005 |
| Ni mg/l | 0,05 | 0,5 | < 0,005 | < 0,005 |
| Cr, ges. mg/l | 0,05 | 1,0 | < 0,007 | 0,028 |
| Ba mg/l | - | 1,0 | 0,52 | 0,11 |
| Punktdruckfestigkeit N |  |  |  | 1.150 |

Der ph-Wert des Verfestigungsproduktes liegt im optimalen Bereich, damit verbunden ist eine sehr geringe Löslichkeit für alle Schwermetalle, insbesondere Blei und Cadmium.

Beispiel 2:

Der in Beispiel 1 genannte kalkarme Flugstaub aus einer Abfallverbrennungsanlage wurde durch einen Flugstaub aus der gleichen Verbrennungsanlage und etwa gleicher Müllzusammensetzung mit einem freien Kalkgehalt von ca. 18 % CaO ausgetauscht. Die sonstigen Versuchsbedingungen wurden nicht geändert.
Es wurden folgende Ergebnisse gefunden:
in Spalte I: die zulässigen Grenzwerte der Trinkwasserverordnung von 1986
in Spalte II: die zulässigen Grenzwerte der Deponieklasse 2
in Spalte III: die ermittelten Eluatwerte des verarbeiteten Flugstaubes und
in Spalte IV: die ermittelten Eluatwerte des nach dem Beispiel hergestellten Verfestigungsproduktes

Tabelle

|  | I Trinkwasserverordnung 1986 | II Deponieklasse 2 | III Kalkreicher Flugstaub | IV Verfestigungsprodukt |
|---|---|---|---|---|
| pH |  | 5,5 - 12,0 | 12,4 | 12,3 |
| Pb mg/l | 0,04 | 0,5 | 74 | 1,6 |
| Hg mg/l | 0,001 | 0,005 | < 0,0002 | 0,0008 |
| Cd mg/l | 0,005 | 0,05 | < 0,0005 | < 0,0005 |
| TL mg/l | - | 0,1 | < 0,01 | < 0,01 |
| Zn mg/l | - | 5,0 | 4 | < 0,05 |
| Sn mg/l | - | 0,5 | 0,01 | < 0,01 |
| Ni mg/l | 0,05 | 0,5 | < 0,005 | < 0,005 |
| Cr, ges. mg/l | 0,05 | 1,0 | < 0,09 | < 0,03 |
| Ba mg/l | - | 1,0 | 0,09 | 0,24 |
| Punktdruckfestigkeit N |  |  |  | 980 |

Aufgrund des hohen ph-Wertes des Verfestigungsproduktes, bedingt durch den hohen Freikalkgehalt des Flugstaubes aus der Abfallverbrennungsanlage, wurden hohe Löslichkeiten für Blei ermittelt.

Beispiel 3:

4

Der gleiche kalkreiche Flugstaub aus einer Abfallverbrennungsanlage wie im Beispiel 2 wurde mit 10 % Zement und 5 % Quarzmehl 90 % kleiner 0,09 mm vermischt. Die sonstigen Versuchsbedingungen wie im Beispiel 2 wurden nicht verändert.

Es wurden folgende Ergebnisse gefunden:

in Spalte I: die zulässigen Grenzwerte der Trinkwasserverordnung von 1986
in Spalte II: die zulässigen Grenzwerte der Deponieklasse 2
in Spalte III: die ermittelten Eluatwerte des verarbeiteten Flugstaubes und
in Spalte IV: die ermittelten Eluatwerte des nach dem Beispiel hergestellten Verfestigungsproduktes

Tabelle

|  | I Trinkwasserverordnung 1986 | II Deponieklasse 2 | III Kalkreicher Flugstaub | IV Verfestigungsprodukt |
|---|---|---|---|---|
| pH |  | 5,5 - 12,0 | 12,4 | 10,7 |
| Pb mg/l | 0,04 | 0,5 | 74 | 0,02 |
| Hg mg/l | 0,001 | 0,005 | < 0,0002 | 0,0008 |
| Cd mg/l | 0,005 | 0,05 | < 0,0005 | < 0,0005 |
| TL mg/l | - | 0,1 | < 0,01 | < 0,01 |
| Zn mg/l | - | 5,0 | 4 | < 0,05 |
| Sn mg/l | - | 0,5 | 0,01 | < 0,01 |
| Ni mg/l | 0,05 | 0,5 | < 0,005 | < 0,005 |
| Cr, ges. mg/l | 0,05 | 1,0 | < 0,09 | 0,07 |
| Ba mg/l | - | 1,0 | 0,09 | 0,09 |
| Punktdruckfestigkeit N |  |  |  | 1.020 |

Dieses Beispiel zeigt, daß durch den Zusatz eines Gemisches von Zement und Quarzmehl der überschüssige Kalk in der Ausgangsmischung durch den hydrothermalen Prozeß gebunden wird. Der pH-Wert des Verfestigungsproduktes liegt im optimalen Bereich und dementsprechend wurden geringe Löslichkeiten für alle Schwermetalle ermittelt.

Beispiel 4:

Der Zement in der Mischung des Beispiels 1 wurde durch 15 Gewichtsteile Kalkhydrat ersetzt. Die sonstigen Versuchsbedingungen des Beispiels 1 wurden nicht geändert.

An den Rohlingen unmittelbar nach dem Verpressen und an den Fertigprodukten der Kalk- und der Zementmischung wurden die Punktdruckfestigkeit der Rohlinge und der Fertigprodukte nach dem hydrothermalen Prozeß mit einer Erichson-Prüfmaschine bei einem Vorschub von 8 mm/min ermittelt. Für jede Mischung wurde die mittlere Festigkeit aus jeweils 16 Teilversuchen bestimmt.

Es wurden folgende Werte ermittelt:

| Mischung | Rohlingsfestigkeit | Endfestigkeit nach hydrothermaler Behandlung |
|---|---|---|
|  | N | N |
| 85 % Flugstaub 15 % Zement | 500 | 1.150 |
| 85 % Flugstaub 15 % Kalkhydrat | 290 | 980 |

Die Rohlingsfestigkeit bei der Mischung mit Zement ist deutlich höher als die mit Kalkhydrat.

## Ansprüche

1. Verfahren zur Entsorgung von Stäuben aus Abfallverbrennungsanlagen, bei welchem die Stäube mit anderen Stoffen unter Zusatz von Wasser intensiv gemischt werden, wobei der Wasserzusatz so bemessen ist, daß eine optimale Verdichtung möglich ist und die Mischung danach unter Verdichtung zu standfesten Formlingen verarbeitet wird und die Formlinge in einem Autoklaven bei einem Sattdampfdruck von mindestens 1 bar gehärtet werden,
dadurch gekennzeichnet, daß bei Flugstäuben aus Abfallverbrennungsanlagen mit geringem Kalkgehalt, diese Flugstäube unter Zusatz von Wasser mit Zement oder einem Gemisch aus Zement und Kalkhydrat, bei Flugstäuben aus Abfallverbrennungsanlagen, die hydrothermal umsetzbaren Kalk enthalten, unter Zusatz von Wasser mit Zement oder einem Gemisch von Zement und solchen Stoffen, die beim hydrothermalen Prozeß Kalk binden, wie z.B. Quarzmehl oder Flugstäube aus mit Steinkohle befeuerten Wärmeerzeugungsanlagen, vermischt werden.

2. Verfahren nach Anspruch 1, dadurch gekennzeichnet, daß die Mischungszusammensetzung so gewählt wird, daß der ph-Wert des Fertigproduktes, (ermittelt nach DIN 38414, Teil 4) um 11 liegt, wobei der Anteil an Zement oder einem dem Zement äquivalenten Gemisch je nach thermohydraulisch abbindbaren Bestandteilen in den Stäuben 3 bis 25% der Gesamtmenge beträgt und der Gesamtanteil von thermohydraulisch abbindbaren staubförmigen, feinkörnigen Bestandteilen mindestens 8 % der Gesamtmenge beträgt.

3. Verfahren nach Anspruch 1 oder 2, dadurch gekennzeichnet, daß die Flugstäube zumindest teilweise durch schwermetallhaltige Schlämme, insbesondere Galvanikschlamm, ersetzt sind.